# FASCICULE DE BREVET EUROPEEN

(11) **EP 3 286 851 B1**
(45) Date de publication et mention de la délivrance du brevet: **28.10.2020**
(21) Numéro de dépôt: 16720468.4
(22) Date de dépôt: 22.04.2016
(51) Int. Cl.: H01Q 21/24, H04B 7/185, H01Q 1/28, H01Q 15/24

(54) **GENERATION PAR UN SATELLITE D'UN SIGNAL D'UN SECOND TYPE DE POLARISATION PAR DEUX TRANSPONDEURS ADAPTÉS A TRAITER DES SIGNAUX POLARISES SELON UN PREMIER TYPE DE POLARISATION.**
ERZEUGUNG DURCH EINEN SATELLITEN EINES SIGNALS MIT EINER ZWEITEN ART VON POLARISATION DURCH ZWEI TRANSPONDER EINGERICHTET ZUR BEARBEITUNG VON SIGNALEN POLARIZIERT ENTSPRECHEND EINER ERSTEN ART VON POLARISATION.
GENERATION BY A SATELLITE OF A SIGNAL OF A SECOND TYPE OF POLARIZATION BY TWO TRANSPONDERS ADAPTED TO PROCESS SIGNALS POLARIZED ACCORDING TO A FIRST TYPE OF POLARIZATION.

(30) Priorité: 22.04.2015 FR 1553609
(43) Date de publication de la demande: 28.02.2018
(73) Titulaire: Eutelsat SA, 75015 Paris (FR)
(72) Inventeur: ARCIDIACONO, Antonio, 75016 Paris (FR); FINOCCHIARO, Daniele Vito, 75015 Paris (FR); LE PERA, Alessandro, 92130 Issy-les-Moulineaux (FR)
(74) Mandataire: Cabinet Camus Lebkiri
(86) Numéro de dépôt international: PCT/FR2016/050949
(87) Numéro de publication internationale: WO 2016/170282

(56) Documents cités:
- FR-A1- 3 007 913
- US-A1- 2002 171 596
- US-A1- 2003 203 733
- US-A1- 2009 061 760

## Description

### DOMAINE

Le domaine de l'invention concerne les méthodes permettant de générer des signaux polarisés circulairement depuis un satellite comprenant des transpondeurs de polarisations linéaires configurés pour traiter des signaux polarisés linéairement. Le domaine concerne plus particulièrement les procédés permettant de traiter des signaux émis par une station sol vers le satellite pour qu'ils puissent être reçus par des terminaux ayant des antennes polarisées circulairement.

### ETAT DE L'ART

Actuellement, il existe des moyens satellitaires permettant de transmettre des signaux polarisés circulairement à partir de signaux émis depuis la terre à destination du satellite comportant eux-mêmes une polarisation circulaire.

En revanche, il existe un besoin opérationnel de transmettre des signaux polarisés circulairement à destinations de terminaux ayant des antennes polarisées circulairement depuis un satellite alors que ce satellite comporte des transpondeurs initialement configurés pour traiter des polarisations linéaires. Comme dans l'usage, dans cette description un "transpondeur" comprend une antenne de réception et une antenne d'émission. De ce fait, la polarisation donnée par l'antenne indique une configuration de polarisation pour un transpondeur.

Par exemple, les applications pour des terminaux mobiles nécessitent que le signal soit en polarisation circulaire pour optimiser la qualité de la réception, alors que le satellite utilise des transpondeurs linéaires. Les transpondeurs linéaires ont été déployés initialement pour des applications fixes.

Un autre exemple est le déploiement d'un service vers des terminaux déjà existants en polarisation circulaire, en utilisant un satellite prévu pour d'autres terminaux.

Un problème provient du fait qu'il est impossible de changer la configuration des transpondeurs une fois que les satellites sont en orbite. Il est également couteux de mettre en orbite de nouveaux satellites ayant des transpondeurs à polarisations circulaires. Une solution souhaitée serait d'utiliser les satellites existants comportant des transpondeurs à polarisations linéaires pour générer des signaux se couplant en sortie d'antenne du satellite pour générer un signal avec polarisation circulaire.

Le couplage des signaux de deux transpondeurs permet aussi de cumuler la puissance utile (EIRP) du signal envoyé aux terminaux. En effet, le signal cumulé peut avoir une puissance double (+3 dB) par rapport à un signal émis par un seul transpondeur, et ceci peut améliorer la qualité de réception, surtout dans le cas d'applications mobiles avec des antennes petites.

La demande de brevet US 2009/0061760 apporte une solution permettant de générer un signal avec polarisation circulaire, à partir de signaux émis depuis la terre avec une polarisation linéaire et qui sont réémis vers des terminaux depuis le satellite avec une polarisation linéaire. Cette demande traite de la possibilité d'utiliser deux transpondeurs partageant une bande commune pour créer entre les signaux polarisés linéairement dans cette bande un signal avec polarisation circulaire en sortie d'antenne.

Cette demande de brevet traite notamment d'un problème lié aux oscillateurs de chaque transpondeur induisant des erreurs en fréquence et en phase sur chaque composante linéaire transitant chacune dans un transpondeur.

Un inconvénient de la solution décrite dans cette demande de brevet est qu'elle ne prend pas en compte les effets indésirables de signaux se combinant pour se polariser circulairement dans une bande commune de deux transpondeurs lorsque le spectre des signaux s'étale en dehors de la bande commune des deux transpondeurs.

### RESUME DE L'INVENTION

L'invention permet de résoudre les inconvénients précités.

Un objet de l'invention concerne un procédé de génération d'un signal ayant un second type de polarisation à partir d'au moins deux transpondeurs d'un satellite (SAT) adaptés à traiter des signaux polarisés selon un premier type de polarisation, le procédé comprenant :
▪ Une émission par un émetteur au sol (ANT1) d'au moins deux composantes de signaux (VP1, HP1) polarisés avec le premier type de polarisation et déphasés de telle sorte à produire un signal polarisé avec le second type de polarisation par au moins deux transpondeurs d'un satellite (SAT), les aux moins deux transpondeurs (T1, T2) ayant des canaux en fréquences partageant entre eux au moins une bande spectrale commune (C1) comprenant au moins une partie du spectre des signaux émis ;
▪ Un traitement des signaux (HP1, VP1) par les aux moins deux transpondeurs (T1, T2) du satellite (SAT), les composantes des signaux (HP1, VP1) se combinant après leur émission par le satellite (SAT) pour former un signal avec une polarisation du second type (SAT) ;
▪ Une réception par un terminal de référence au sol possédant au moins une antenne polarisée avec le premier ou le second types de polarisation, de manière à recevoir les signaux émis par le satellite ;
▪ Une mesure d'au moins un paramètre physique à partir des signaux reçus et une détermination d'un paramètre de correction pour être appliqué à la génération des composantes de signaux polarisés avec le premier type de polarisation ;
▪ Une génération d'une compensation de phase et/ou d'amplitude et/ou de fréquence des composantes des signaux polarisés selon le premier type de polarisation émis par l'émetteur au sol, ladite compensation étant générée par le contrôleur de polarisation de sorte à former un système bouclé entre l'émetteur au sol et le satellite et à assurer une polarisation du second type par les composantes se combinant après leur émission par le satellite.

Selon un mode de réalisation, le procédé comprend l'émission par un émetteur au sol:
▪ d'au moins deux composantes de signaux polarisés avec le premier type de polarisation à partir d'un signal principal (SM) et déphasés de telle sorte à produire un signal polarisé avec le second type de polarisation par au moins deux transpondeurs d'un satellite, les aux moins deux transpondeurs ayant des canaux en fréquences partageant entre eux au moins une bande spectrale commune comprenant au moins une partie du spectre des signaux émis ;
▪ d'au moins un signal pilote, ledit signal pilote comprenant au moins une composante de polarisation linéaire formant soit une onde continue, soit une séquence étalée dans le spectre,

Selon un mode de réalisation, le procédé comprend une mesure :
▪ d'au moins un paramètre physique à partir des signaux reçus provenant du signal principal;
▪ d'au moins un paramètre physique à partir des signaux reçus provenant du ou des signaux pilotes,
pour déterminer un paramètre de correction pour être appliqué à la génération des composantes de signaux polarisés avec le premier type de polarisation.

Selon un mode de réalisation, le paramètre de correction est pris en compte dans l'étape de génération d'une compensation de phase et/ou d'amplitude et/ou de fréquence des composantes des signaux polarisés selon le premier type de polarisation.

Selon un mode de réalisation, le premier type de polarisation est une polarisation linéaire et le second type de polarisation est une polarisation circulaire.

Selon un mode de réalisation, le premier type de polarisation est une polarisation circulaire et le second type de polarisation est une polarisation linéaire.

Un avantage de l'invention est de pallier aux traitements des signaux dans les transpondeurs qui modifient les polarisations des composantes émises par les satellite. En effet, en introduisant un paramètre correctif par l'intermédiaire du contrôleur de polarisation, les signaux se combinent en sortie du satellite de sorte à produire un signal avec une polarisation linéaire souhaitée ou une polarisation circulaire souhaitée, selon le mode de réalisation envisagée.

Un avantage est d'obtenir une meilleure réception des signaux au sol par des récepteurs ayant une polarisation donnée.

Selon un mode de réalisation, le contrôleur de polarisation génère deux composantes linéaires orthogonales à partir d'un signal principal délivré en entrée dudit contrôleur de polarisation, un premier composant générant une composante de polarisation horizontale à partir du signal principal et un second composant générant une composante de polarisation verticale à partir du signal principal, au moins une composante de polarisation linéaire étant compensée en amplitude et/ou en phase et/ou en fréquence.

Selon un mode de réalisation, le contrôleur de polarisation génère deux composantes linéaires à partir de deux signaux principaux délivrés en entrée dudit contrôleur de polarisation, un premier signal ayant en sortie du satellite SAT une polarisation circulaire gauche et un second signal ayant en sortie du satellite SAT une polarisation circulaire droite, le contrôleur de polarisation générant une composante du signal de polarisation horizontale et une composante du signal de polarisation verticale à partir des deux signaux principaux en entrées, au moins une composante de polarisation linéaire étant compensée en amplitude et/ou en phase et/ou en fréquence.

De manière analogue, selon un autre mode de réalisation, le contrôleur de polarisation génère deux composantes circulaires à partir d'un ou de deux signaux selon les cas. Les deux composants génèrent alors deux composantes circulaires droite et gauche à partir du signal principal. Les compensations en amplitudes et/ou en fréquences et/ou en phases étant alors réalisées sur au moins l'une des composantes circulaires.

Selon un mode de réalisation, deux ensembles de transpondeurs sont associés chacun à une polarisation linéaire donnée, une polarisation d'un transpondeur d'un premier ensemble étant orthogonale à la polarisation linéaire d'un transpondeur du second ensemble, chaque transpondeur du premier ensemble partageant au moins une bande spectrale commune avec un transpondeur du second ensemble.

Avantageusement, les deux composantes linéaires émises par l'émetteur au sol comprennent chacune au moins un spectre fréquentiel compris dans la bande spectrale commune à au moins deux transpondeurs du satellite.

Selon un mode de réalisation, au moins un premier transpondeur du premier ensemble partage au moins une bande spectrale commune avec deux autres transpondeurs du second ensemble les deux autres transpondeurs ayant une polarisation orthogonale au premier transpondeur, ladite bande spectrale commune comprenant deux sous-bandes spectrales.

De manière analogue, selon un autre mode de réalisation, les deux ensembles de transpondeurs peuvent être associés à des polarisations circulaires orthogonales entre elles.

Selon un mode de réalisation, l'étape de génération d'une compensation de phase et/ou d'amplitude et/ou de fréquence des signaux polarisés linéairement par le contrôleur de polarisation est configurée de sorte à diminuer les effets sur au moins une composante linéaire, lesdits effets étant liés à la présence d'au moins un spectre d'un signal transmis par le premier transpondeur dans une bande en dehors de la bande commune de deux transpondeurs, dans laquelle bande commune, ladite au moins une composante linéaire est émise.

Selon un mode de réalisation, la diminution de l'influence est calibrée pour obtenir un signal avec polarisation circulaire formée par deux polarisations linéaires de composantes partageant une bande commune de deux transpondeurs respectivement du premier et du second ensemble de transpondeurs.

Selon un mode de réalisation, le procédé comprend une étape de filtrage de chaque composante polarisée linéairement dans les portions communes de spectres partagées entre respectivement deux transpondeurs de chacun des deux ensembles de transpondeurs.

Selon un mode de réalisation, le filtrage est réalisé au sol avant l'émission des composantes polarisées linéairement. Selon un autre mode de réalisation, le filtrage est réalisé par les transpondeurs avant l'émission des composantes par l'antenne d'émission du satellite.

Selon une variante de réalisation, lorsque la première polarisation est circulaire et la seconde polarisation est linéaire, alors l'étape de génération d'une compensation de phase et/ou d'amplitude et/ou de fréquence des signaux s'applique aux signaux polarisés circulairement pour corriger en sortie des transpondeurs les polarisations linéaires se formant lorsque les signaux sont émis.

Dans ce cas, la diminution de l'influence est calibrée pour obtenir un signal avec polarisation linéaire formée par deux polarisations circulaires de composantes partageant une bande commune de deux transpondeurs respectivement du premier et du second ensemble de transpondeurs.

L'étape de filtrage, lorsqu'elle est réalisée, est adaptée à la polarisation circulaire dans ce second cas.

Selon un mode de réalisation, un signal pilote est émis par l'émetteur sol, ledit signal pilote comprenant au moins une composante de polarisation linéaire ou circulaire formant soit une onde continue, soit une séquence étalée dans le spectre

L'utilisation du signal pilote permet de calculer les paramètres correctifs à appliquer au sol en émission aux composantes du signal à émettre sans modifier les signaux émis eux-mêmes.

Selon un mode de réalisation, le signal pilote comprend deux composantes de polarisation linéaire, les deux composantes polarisées linéairement étant émises dans le spectre commun de deux transpondeurs appartenant respectivement à chacun des deux ensembles de transpondeurs.

Selon un mode de réalisation, une composante de polarisation linéaire du signal pilote est émise dans une bande de fréquences d'un transpondeur du premier ensemble de transpondeurs non partagée avec une bande de fréquence d'un transpondeur du second ensemble de transpondeurs.

Selon un autre cas, lorsque le premier type de polarisation est circulaire, alors le signal pilote peut être composé de différentes composantes sensiblement circulaires. Ces dernières sont émises dans le spectre commun de deux transpondeurs appartenant respectivement à chacun des deux ensembles de transpondeurs. Selon une variante, au moins une composante circulaire du signal pilote est émise dans une bande de fréquence d'un transpondeur du premier ensemble de transpondeurs non partagée avec une bande de fréquence d'un transpondeur du second ensemble de transpondeurs.

Selon un mode de réalisation, l'étape de traitement des signaux par les au moins deux transpondeurs comprend une application de coefficient d'amplification et un gabarit de filtrage à chaque composante polarisée linéairement ou circulairement d'une bande commune de deux transpondeurs de sorte à produire des signaux comprenant une polarisation en sortie d'antenne :
- circulaire dans un sens donné ou ;
- linéaire selon un sens donné (selon le cas envisagé).

Selon un mode de réalisation, la réception au sol par le terminal de référence de chaque composante de polarisation circulaire ou linéaire est réalisée simultanément par autant d'antennes nécessaires configurées selon les polarisations circulaires générées ou selon les polarisations linéaires générées.

Selon un mode de réalisation, la réception au sol par le terminal de référence comprend la réception de deux composantes de polarisation circulaire ou linéaire ayant selon le cas envisagé :
- soit respectivement une polarisation circulaire gauche et une polarisation circulaire droite ;
- soit respectivement une polarisation linéaire verticale et une polarisation horizontale.

Selon un mode de réalisation, une mesure d'un paramètre physique comprend une mesure de la cross-polarisation, également appelée polarisation croisée, entre les deux composantes des signaux reçues au moyen du contrôleur de polarisation, le paramètre de correction étant automatiquement calculé pour être appliqué à la génération des signaux polarisés linéairement transmis au satellite.

Selon une variante de réalisation, lorsque le premier type de polarisation est circulaire, le paramètre de correction est automatiquement calculé pour être appliqué à la génération des signaux polarisés circulairement et transmis au satellite. Les signaux se combinent lors de leur émission vers le satellite sensiblement linéairement. Les paramètres correctifs introduits peuvent introduire un biais lors de la combinaison des composantes de polarisation. La combinaison est alors partiellement linéaire ou sensiblement linéaire du fait de l'influence des paramètres correctifs sur l'une ou/ et l'autre composante circulaire.

Selon un mode de réalisation, une mesure d'un paramètre physique comprend une mesure de la différence des temps de propagation de groupe de chacune des composantes de polarisation des signaux reçus.

Selon un mode de réalisation, une mesure d'un paramètre physique comprend une mesure d'une influence en amplitude et/ou en phase d'un spectre d'un signal émis dans un transpondeur en dehors de la bande commune de deux transpondeurs sur une composante linéaire d'un signal pilote émis dans la bande commune des deux transpondeurs.

Selon une variante de réalisation, lorsque le premier type de polarisation est circulaire et le second type est linéaire, la mesure d'influence est effectuée sur une composante circulaire d'un signal pilote émis dans la bande commune des deux transpondeurs.

Selon un mode de réalisation, la détermination du paramètre de correction comprend une évaluation d'un premier paramètre de variation de phase, et/ou d'un second paramètre de variation d'amplitude et/ou d'un troisième paramètre de variation de fréquence des signaux reçus par le terminal de référence entre les au moins deux transpondeurs déduit de la mesure d'au moins un paramètre physique.

Selon un mode de réalisation, les mesures d'au moins un paramètre reçu sont réalisées à partir de la réception d'au moins une composante d'un signal pilote.

Selon un mode de réalisation, les mesures d'au moins un paramètre reçu sont réalisées à partir des signaux reçus comprenant au moins les composantes du signal principal.

Selon un mode de réalisation, lorsqu'au moins un transpondeur du premier ensemble partage au moins une bande spectrale commune avec deux transpondeurs du second ensemble, ladite bande spectrale commune comprenant deux sous-bandes spectrales, le contrôleur de polarisation comprend une configuration des transpondeurs opérationnels du satellite de sorte à simuler les interactions d'au moins une composante d'un signal reçue dans une sous-bande d'un transpondeur sur une composante d'un signal reçu dans une autre sous-bande du même transpondeur commune à un autre transpondeur pour générer un paramètre de correction à appliquer à la composante linéaire ou circulaire (selon le mode utilisé) du signal transmis dans la bande commune.

Selon un mode de réalisation, les interactions comprennent l'influence d'un signal d'une sous bande sur la puissance d'un autre signal émis dans une autre sous bande dans le même transpondeur.

Selon un mode de réalisation, les interactions comprennent l'influence d'un signal d'une sous bande sur la phase d'un autre signal émis dans une autre sous bande dans le même transpondeur.

Selon un mode de réalisation, un calculateur du contrôleur de polarisation réalise une comparaison entre chaque composante de polarisation linéaire du signal principal émis vers le satellite avec les composantes linéaires respectives déduites des composantes circulaires reçues par le terminal de référence, les composantes de polarisation linéaires émises du signal principale étant mémorisées dans une mémoire du contrôleur de polarisation.

Lorsque le premier type de polarisation est une polarisation circulaire et que le second type de polarisation est linéaire, l'étape de comparaison est effectuée sur les composantes circulaires du signal principale. Ces dernières sont déduites des composantes linéaires reçues par le terminal de référence.

Selon un mode de réalisation, le terminal de référence et le contrôleur de polarisation sont :
▪ Soient co-localisés dans un même lieu géographique ;
▪ Soient agencés dans deux positions différentes, les mesures et/ou analyses réalisées par le terminal de référence étant ensuite envoyés au contrôleur de polarisation par un moyen de communication.

Selon un mode de réalisation, lorsque le terminal de référence et le contrôleur de polarisation sont situés dans deux positions différentes, une valeur de compensation de phase est calculée prenant en compte le diagramme de rayonnement de l'antenne d'émission du satellite de sorte à générer, à partir des paramètres des signaux reçus par le terminal de référence, les compensations à effectuer sur les signaux émis vers le satellite pour optimiser la qualité de la polarisation circulaire, ou linéaire selon le mode envisagé, dans la région où se trouvent les terminaux.

Selon un mode de réalisation, le contrôleur de polarisation comprend le terminal de référence.

Selon un mode de réalisation, le traitement des signaux par chaque transpondeur comprend :
▪ la réception des signaux par des antennes polarisé selon la première polarisation ;
▪ au moins une transposition des fréquences dédits signaux reçus ;
▪ une amplification desdits signaux reçus ;
▪ une émission des signaux traités par les transpondeurs par au moins une antenne d'émission du satellite polarisé selon la première polarisation.

Un autre objet de l'invention concerne un dispositif de correction de polarisation de composantes de signaux, ledit dispositif de correction comprenant un contrôleur de polarisation comportant des moyens de calculs et une mémoire pour appliquer des paramètres correctifs à des composantes linéaires ou circulaires de signaux, les dits paramètres correctifs étant estimés pour pallier à un traitement desdits signaux transitant dans au moins deux transpondeurs d'un satellite, les corrections appliquées permettant de générer un signal avec polarisation circulaire ou linéaire lorsque les signaux se combinent en sortie des transpondeurs.

Avantageusement, le dispositif de correction comprend en outre des moyens pour mettre en œuvre le procédé de l'invention. Notamment, le dispositif de correction comprend des moyens de traitements de signaux pour corriger l'amplitude, la phase ou la fréquence de signaux. En outre, il comprend des moyens pour traiter des signaux avec une polarisation donnée, circulaire, sensiblement circulaire ou linéaire.

Avantageusement, le dispositif de correction comprend des moyens pour générer un signal pilote et/ou des moyens pour traiter les signaux émanant d'un générateur auquel il est couplé.

Selon un mode de réalisation, le dispositif de correction est le contrôleur de polarisation.

### BREVE DESCRIPTION DES FIGURES

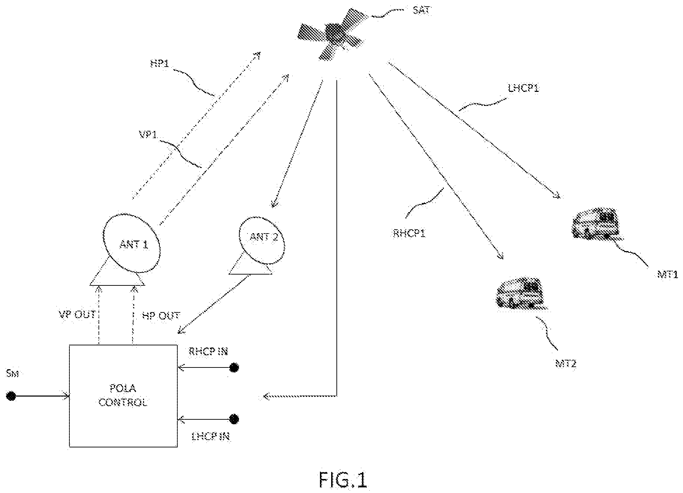

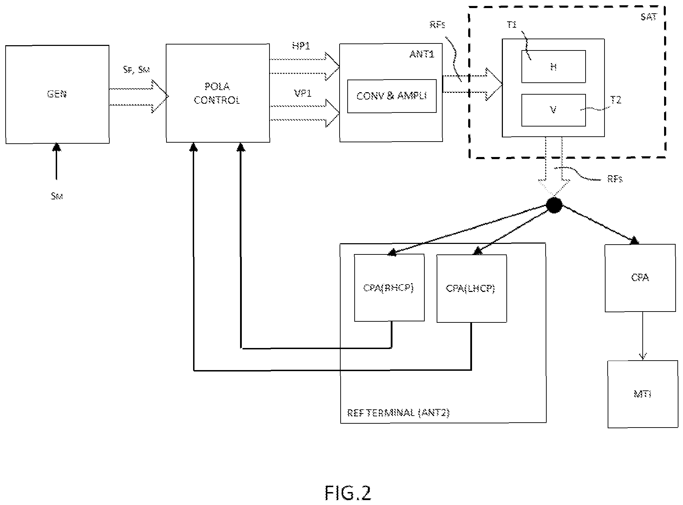

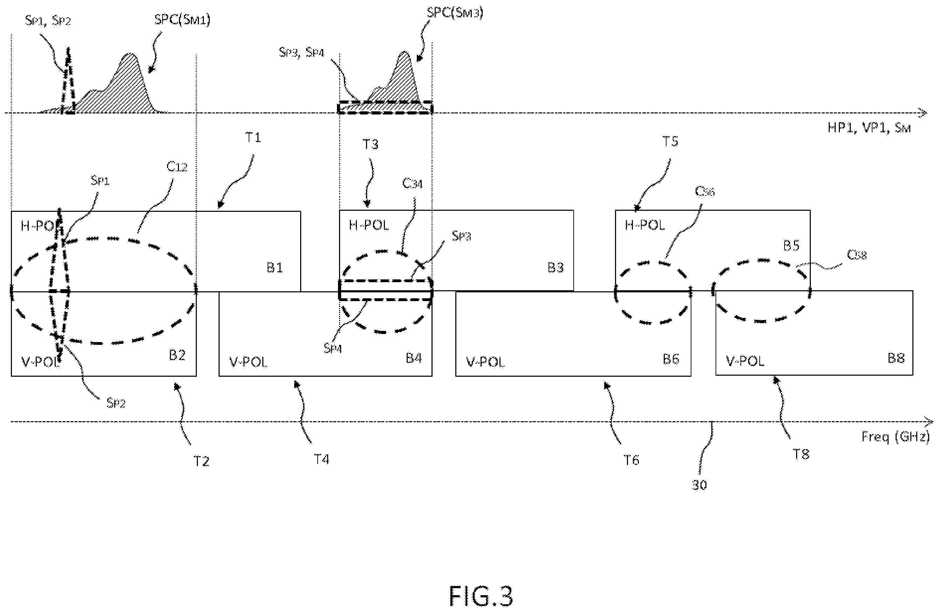

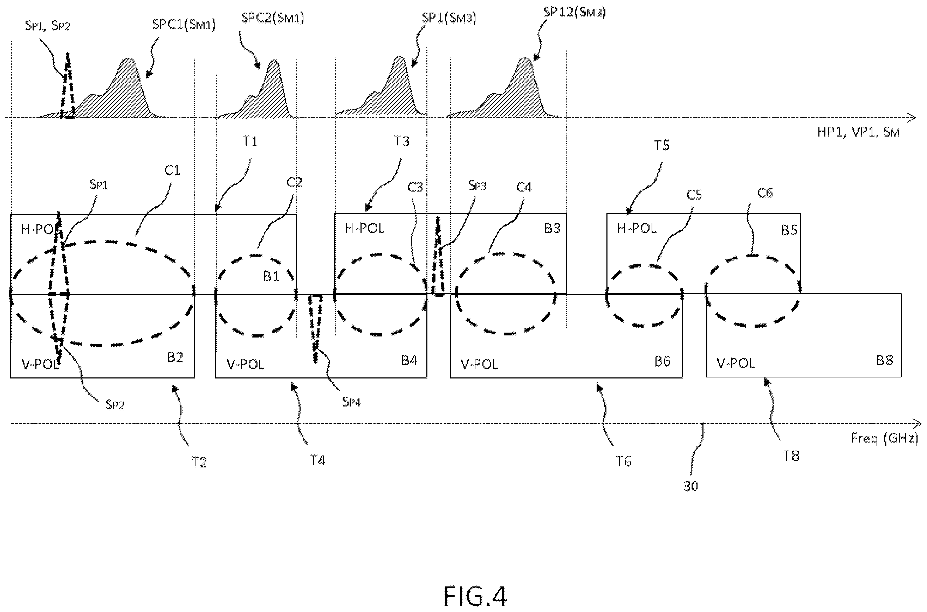

D'autres caractéristiques et avantages de l'invention ressortiront à la lecture de la description détaillée qui suit, en référence aux figures annexées, qui illustrent :
▪ figure 1 : un schéma de principe général représentant les différents éléments permettant de mettre en œuvre l'invention ;
▪ figure 2 : un schéma fonctionnel des fonctions à mettre en œuvre pour réaliser l'invention;
▪ figure 3 : une représentation de canaux de différents transpondeurs linéaires d'un satellite et les bandes partagées entre différents transpondeurs ;
▪ figure 4 : un cas dans lequel un transpondeur comporte différentes sous-bandes partagées avec deux autres transpondeurs.

### DESCRIPTION

Dans la description qui suit, une station au sol est une station qui comprend au moins une antenne d'émission ou de réception pour communiquer avec un satellite en orbite. Dans la suite de la description, on confond, par une même désignation ANT 1, la station au sol et son antenne d'émission ou de réception. On peut appeler ANT 1, la première station au sol ou l'antenne d'émission de cette station. De la même manière, ANT 2 désigne l'antenne de réception de la seconde station au sol ou encore la station elle-même.

L'invention comprend deux principaux modes de réalisation. Un premier mode principal correspond au traitement par un contrôleur de polarisation de signaux ayant des composantes linéaires de sorte à produire un signal avec polarisation circulaire en sortie des transpondeurs d'un satellite lorsque les composantes se combinent après leur émission. Un exemple détaillé est décrit ce premier mode principal dans la suite de la description.

Un second mode principal correspond au traitement par le contrôleur de polarisation de signaux ayant des composantes circulaires de sorte à produire un signal avec polarisation linéaire en sortie des transpondeurs lorsque les signaux se combinent après leur émission.

La présente description détaillée décrit le premier mode principal de réalisation lorsque le premier type de polarisation est une polarisation linéaire et le second type de polarisation est une polarisation circulaire.

L'invention se rapporte également au second mode principal. Dans ce dernier cas les paramètres correctifs sont appliqués aux composantes circulaires dans le contrôleur de polarisation. Les transpondeurs sont configurés pour traiter des polarisations circulaires formant des polarisations sensiblement linéaires lorsqu'ils partagent une bande commune. Dans ce cas, en sortie des transpondeurs, les composantes circulaires de signaux se combinent pour former un signal avec polarisation linéaire lors de leurs transmissions.

La figure 1 représente un schéma général des éléments d'un système mis en œuvre pour exécuter le procédé de l'invention.

Parmi les éléments du système mettant en œuvre le procédé de l'invention, on trouve :
▪ Une première station au sol comprenant une antenne ANT 1 qui émet des signaux en polarisation linéaire à destination d'un satellite SAT ;
▪ Un satellite SAT comprenant des transpondeurs pour traiter les signaux reçus afin de les réémettre avec une polarisation circulaire vers des mobiles au sol, notés MT1, MT2.
▪ Des mobiles au sol, notés MT1, MT2, qui sont configurés pour recevoir des signaux polarisés circulairement ;
▪ Une station au sol comprenant une antenne de réception ANT 2 configurée pour recevoir des signaux polarisés circulairement ou linéairement ;
▪ Un contrôleur de polarisation, qui est un composant, noté POLA CONTROL sur la figure 1. Ce composant peut être positionné au niveau de la première station au sol ANT1 ou de la seconde station au sol ANT2.

Le procédé de l'invention permet de réaliser un système bouclé au niveau des communications entre les deux stations au sol ANT1 et ANT2 et le satellite SAT. Le contrôleur de polarisation POLA CONTROL détermine grâce à ce système bouclé des facteurs correctifs à appliquer aux composantes linéaires des signaux transmis par la première station au sol ANT 1. Les facteurs correctifs sont déterminés à partir de mesures ou de calculs de paramètres physiques des signaux reçus par la seconde station au sol ANT2 en provenance du satellite SAT. Les facteurs correctifs sont établis pour que les signaux aient une polarisation circulaire en sortie du satellite SAT. Les paramètres correctifs sont notamment calculés et appliqués aux composantes linéaires pour pallier aux imperfections des voies de transmission de chaque transpondeur.

Les signaux polarisés circulairement peuvent alors être reçus par des stations mobiles MT1, MT2 configurées pour recevoir des signaux polarisés circulairement.

On désigne les composantes linéaires HP1 et VP1 des signaux envoyés par la première station au sol ANT 1 vers le satellite SAT. Selon un mode de réalisation, une composante est préférentiellement polarisée verticalement VP1 et une seconde composante HP1 est préférentiellement polarisée horizontalement. Cependant, ces composantes peuvent être corrigées en amplitude, en phase ou en fréquence par les facteurs correctifs calculés par le procédé de l'invention. Les composantes linéaires sont corrigées et émises par la première station au sol ANT1 de sorte qu'après le traitement par les transpondeurs du satellite SAT, une polarisation circulaire des signaux soit générée.

On note LHCP1 ou RHCP1 les polarisations circulaires respectivement « gauche » et « droite » générées par le satellite SAT. Selon un premier mode de réalisation, une seule polarisation circulaire est générée. L'autre composante peut alors être utilisée à la réception pour calculer un paramètre physique de variation de phase, d'amplitude ou de fréquence entre les deux composantes linéaires et en déduire par exemple un paramètre de cross-modulation.

### Contrôleur de polarisation émission

### Module émetteur / module récepteur

Le contrôleur de polarisation, noté POLA CONTROL, comprend au moins :
▪ un module récepteur permettant de recevoir les deux composantes de polarisations circulaires ou linéaires reçues par la seconde station au sol ANT2 ;
▪ un calculateur permettant d'effectuer des opérations sur les signaux reçus pour déterminer des paramètres physiques des signaux relatifs à leur polarisation et d'en extraire des paramètres correctifs à appliquer aux composantes linéaires VP1, HP1 à émettre au satellite SAT par la première station au sol ANT1 ;
▪ un module émetteur permettant d'émettre des composantes linéaires corrigées notées HP OUT et VP OUT vers la première station au sol à destination du satellite SAT.

Le module émetteur et le module récepteur du contrôleur de polarisation POLA CONTROL peuvent être co-localisés ou être localisés à différentes positions géographiques. La deuxième configuration peut être nécessaire quand les couvertures montante et descendante (« Uplink » et de « Downlink ») du satellite sont différentes. Dans le mode de réalisation dans lequel ils sont délocalisés, une liaison de communication est établie soit par voie terrestre soit par voie satellitaire. Cette liaison est utilisée pour transmettre au calculateur du contrôleur de polarisation POLA CONTROL les données relatives à la réception des signaux. Dans ce dernier cas, le calculateur du contrôleur de polarisation POLA CONTROL peut introduire un paramètre correctif propre à cette transmission prenant en considération le retard ou la gigue des signaux au travers de cette liaison.

### Interface radio

Selon un mode de réalisation, le contrôleur de polarisation POLA CONTROL comprend une interface radio avec un module radio GEN transmettant un signal S_{M}, ce signal est également appelé signal principal. Selon un mode de réalisation, le signal S_{M} est un signal utile transmis par un opérateur et devant être diffusé par le satellite selon une couverture spécifique à une pluralité de récepteurs.

Le contrôleur de polarisation POLA CONTROL est capable, dans ce mode de réalisation, de déduire deux composantes HP1 et VP1 polarisées linéairement à partir du signal d'entrée S_{M}. Les composantes HP1 et VP1 sont amplifiées et émises vers le satellite SAT. À la sortie du satellite, la combinaison des deux composantes émises par le satellite forment le signal S_{M} en polarisation circulaire LHCP (ou RHCP), qui peut être donc reçu par les terminaux avec une antenne à polarisation circulaire.

Selon un autre mode de réalisation, deux signaux principaux modulés sont transmis au contrôleur de polarisation POLA CONTROL. Ce dernier, à partir des deux signaux, génère les deux composantes linéaires polarisées linéairement qui seront transmis au satellite. Les deux composantes linaires sont générées de telles sorte que, à la sortie du satellite, les deux signaux principaux se retrouvent chacun dans une polarisation circulaire (par exemple, le premier signal principal est en polarisation RHCP, et le deuxième est en polarisation LHCP).

Dans ce dernier cas de figure, chaque composante peut être corrigée à partir de paramètres correctifs selon le procédé de l'invention de sorte à compenser les effets non linéaires induits par les transpondeurs.

### Signal pilote

Le générateur de signaux GEN comprend un module permettant de moduler un signal pilote S_{P} dans la bande B_{S} de transmission. Selon un autre mode de réalisation, cette fonction peut également être assurée par le contrôleur de polarisation POLA CONTROL. Le signal pilote S_{P} peut être une simple fréquence continue CW introduite dans la bande B_{S} ou encore une séquence pseudo aléatoire PN étalée en spectre dans la bande B_{S} de manière à éviter toute interférence avec le signal principal S_{M}. Lorsque le signal S_{P} est généré par le générateur de signaux GEN, le contrôleur de polarisation POLA CONTROL est capable de détecter la présence du signal pilote, et d'en mesurer les principales caractéristiques, telles que l'amplitude, la fréquence, la phase.

### Couplage antenne

Le module émetteur du contrôleur de polarisation POLA CONTROL est couplé à au moins une antenne ANT1 pour émettre chaque composante linéaire du signal principal S_{M}. Selon un mode de réalisation, l'antenne ANT1 comprend éventuellement un module permettant de filtrer les signaux et un amplificateur de signal. Dans la suite de la description, on considère que les signaux sont émis dans la bande notée B_{S}.

### Mémoire

Le contrôleur de polarisation POLA CONTROL comprend éventuellement une mémoire permettant de stocker :
▪ des données relatives aux composantes linéaires générées vers l'antenne ANT1 ;
▪ des paramètres physiques mesurés ou calculés des signaux reçus ;
▪ des paramètres correctifs précédemment appliqués qui sont réajustés et enregistrés en fonction des paramètres physiques calculés ;
▪ des paramètres de configuration, insérés par un opérateur ou transmis par un autre système de la station au sol, tels que la caractérisation des transpondeurs ou les éphémérides du satellite.

Ces données peuvent être recoupées entre elles de manière à réaliser des comparaisons entre les signaux polarisés circulairement reçus et les signaux polarisés linéaires corrigés pour en déduire des écarts et asservir le système bouclé.

### Les transpondeurs du satellite

Le satellite SAT comprend une pluralité de transpondeurs, notés T1, T2, ..., TN. Chaque transpondeur comprend :
▪ éventuellement un module de filtrage ;
▪ éventuellement un module permettant de transposer les fréquences des signaux reçus ;
▪ un amplificateur permettant d'amplifier les signaux reçus et ;
▪ un émetteur pour réémettre les signaux vers les récepteurs au sol.

Une antenne de réception permet d'acheminer les signaux reçus vers les transpondeurs lorsque l'antenne de réception est commune. Selon un autre mode de réalisation, chaque transpondeur comprend une antenne de réception.

Selon un mode de réalisation, un mixeur peut être positionné en sortie des transpondeurs de manière à mixés les signaux à émettre.

Chaque transpondeur comprend une bande de fréquences propre permettant de filtrer les signaux reçus et traités avant d'être réémis.

La figure 3 représente un exemple de réalisation comprenant sept différents transpondeurs numérotés ainsi : T1, T2, T3, T4, T5, T6 et T8. Chaque transpondeur du satellite SAT possède au moins une bande en fréquences notées respectivement B1, B2, B3, B4, B5, B6 et B8. Les transpondeurs du satellite SAT sont répartis en deux ensembles de transpondeurs ayant des polarisations linéaires orthogonales. Par exemple, un premier groupe de transpondeurs T1, T3, T5 ayant chacun une polarisation linéaire horizontale H-POL et un seconde groupe de transpondeurs T2, T4, T6, T8 ayant chacun une polarisation linéaire verticale V-POL sont représentés sur les figures 3 et 4.

On note que, suivant la réglementation internationale, un transpondeur possède une bande et une polarisation de réception, appelée également bande montante B_{mi, i∈[1, 8]} et polarisation montante ou « Uplink ». La polarisation de réception est imposée par l'antenne de réception. Cette dernière comprend le signal en provenance de la station au sol. En outre, un transpondeur comprend une bande et une polarisation d'émission, appelée également bande descendante B_{di, i∈[1, 8]} et « polarisation descendante » ou « Downlink » qui comprend le signal émis vers le sol. La polarisation d'émission est imposée par l'antenne d'émission.

Normalement, les deux bandes montante Bₘᵢ et descendante B_{di} sont séparées par une quantité constante, et les polarisations montante et descendante sont inversées. Dans la suite, on va donc indiquer avec les notations B1 à B8 indifféremment la bande montante ou descendante du transpondeur. L'interprétation adéquate pouvant être extraite du contexte. L'invention s'applique dans d'autres architectures satellitaires où les bandes et les polarisations montante et descendante sont agencées différemment.

Dans la suite de la description, on peut considérer, par exemple, que les bandes communes C₁₂, C₃₄, C₅₆, C₅₈ représentées à la figure 3 sont les bandes communes descendantes des signaux émis vers les récepteurs depuis les transpondeurs du satellite.

Deux ensembles de transpondeurs sont représentés sur des lignes différentes selon leur polarisation. L'axe des abscisses 30 correspond aux fréquences de la bande de chaque transpondeur.

Dans un mode de réalisation de l'invention, on considère deux transpondeurs, notés respectivement T1 et T2, configurés pour recevoir des signaux selon des polarisations linéaires dans une bande B1, respectivement B2. Selon un mode de réalisation, les polarisations des antennes de réception des transpondeurs T1 et T2 comprennent respectivement une polarisation horizontale et une polarisation verticale.

La bande de fréquences B_{S} des signaux transmis par l'antenne ANT1 de la première station au sol est comprise dans au moins une bande montante B₁, B₂ d'un des deux transpondeurs T1, T2. Différentes configurations peuvent être envisagées selon les modes de réalisation de l'invention. Les différents modes de réalisation correspondants aux différentes configurations sont décrites au regard des figures 3 et 4.

Selon une première configuration, les composantes linéaires HP1, VP1 du signal S_{M} émis ont un spectre SPC(S_{M}) qui est compris dans une bande commune C₁₂ des deux bandes B1, B2 de chaque transpondeur T1, T2 recevant chacune des composantes linéaires HP1, VP1.

De manière à former le signal S_{M} avec une polarisation circulaire des deux composantes linéaires HP1 et VP1, ces dernières sont émises dans la bande commune C₁₂ des deux transpondeurs T1, T2.

Selon une seconde configuration, un signal supplémentaire, appelé signal pilote S_{P}, peut être adjoint au signal principal S_{M}. Le signal pilote S_{P} peut être une fréquence continue de type carrière « pure » non modulée, c'est-à-dire une onde entretenue CW, également appelée onde continue. Ce signal pilote S_{P} est représenté aux figures 3 et 4 par le signal S_{P1} et S_{P2} dans la bande commune des deux transpondeurs T1, T2. Les deux composantes S_{P1} et S_{P2} ayant des polarisations linéaires sont compensées selon le procédé de l'invention pour former le signal S_{M} avec une polarisation circulaire dans la bande commune des transpondeurs et en sortie du satellite SAT. On entend par composante compensée, une composante corrigée en phase et/ou en amplitude et/ou en fréquence. Les deux composantes linéaires corrigées forment un couple de composantes polarisées linéairement et orthogonales de sorte à générer une composante polarisée circulairement.

Alternativement, les deux composantes S_{P1} et S_{P2} ne sont pas compensées, mais la mesure de leur amplitude et/ou de leur phase et/ou de leur fréquence permet de calculer les paramètres nécessaires pour compenser le signal principal S_{M}.

Dans cette configuration, les composantes linéaires S_{P1} et S_{P2} du signal pilote S_{P} sont émises en marge du spectre SPC(S_{M}) principal des composantes linéaires du signal principal S_{M} de manière à minimiser les interférences avec ce dernier signal.

Selon une troisième configuration, le signal pilote S_{P} est un signal étalé en spectre dans la bande commune B₃₄ de deux transpondeurs comme les deux composantes représentées S_{P3} et S_{P4} émises dans les bandes B3 et B4 des transpondeurs T3 et respectivement T4. De la même manière que précédemment, les deux composantes S_{P3} et S_{P4} dans la bande commune C₃₄ se combinent pour former au moins une polarisation circulaire en sortie de l'antenne d'émission du satellite SAT.

Selon une quatrième configuration représentée à la figure 4, les deux composantes linéaires HP1, VP1 du signal principal S_{M1} ont un spectre plus large comprenant un premier sous-spectre SPC1(S_{M1}) et un second sous-spectre SPC2(S_{M1}). Cette configuration permet d'émettre une partie du spectre SPC1(S_{M1}) du signal principal S_{M1} dans une bande commune C₁ d'un premier couple de transpondeurs T1, T2 et une autre partie du spectre SPC2(S_{M1}) du signal principal S_{M1} dans une seconde bande commune C₂ d'un autre couple de transpondeurs T1, T4.

Cette configuration est appropriée lorsque dans un satellite un transpondeur T1 comprend une première sous-bande C1 et une seconde sous-bande C2 de fréquences commune avec deux autres transpondeurs T2 et T4.

Un avantage de cette configuration est d'augmenter la bande passante utile pour transmettre des signaux. En outre, elle permet de calibrer les compensations selon le procédé de l'invention à apporter aux composantes linéaires pour générer des polarisations circulaires de signaux transitant par trois transpondeurs T1, T2, T4 différents.

Une alternative à cette configuration est de considérer que les deux spectres SPC1 et SPC2 sont associés à des signaux différents ne provenant pas de la même source, c'est-à-dire de la même station au sol, et provenant donc de différents contrôleurs de polarisation. Ce cas peut se produire lorsqu'un transpondeur est utilisé par différents opérateurs partageant la bande de fréquence offerte. Cela signifie que le procédé de l'invention s'applique dans la mesure où une partie du spectre sera corrigée en prenant en considération l'influence de la présence d'un autre spectre d'un même transpondeur.

Dans ce dernier cas, une notation adéquate devrait utiliser une différenciation des signaux: SPC1(S_{M1}) et SPC2(S_{M2}) pour distinguer les signaux S_{M1} et S_{M2} provenant de différentes sources, mais par commodité de rédaction, les deux spectres SPC1 et SPC2 dans la suite de la description seront associés au signal S_{M1}. L'invention s'applique dans le cas où les deux spectres SPC1 et SPC2 proviennent d'une même source ou dans le cas où les deux spectres SPC1 et SPC2 proviennent de sources différentes.

Selon ces deux cas de figures, le procédé de l'invention permet de compenser/corriger les effets mutuels des deux spectres SPC1 et SPC2 non linéaires, les influences du rapport phase/amplitude et des effets amplitude/ amplitude des deux parties du spectre SPC1 et SPC2 du spectre principal SPC.

En effet, la partie du spectre SPC1 introduit des effets sur la partie du spectre SPC2 lorsque les signaux transitent dans un transpondeur donné. Ainsi les paramètres correctifs pour générer une polarisation circulaire des deux composantes linéaires de spectre SPC1 doivent prendre en compte une compensation liée aux effets induits par le spectre SPC2 sur les composantes du spectre SPC1.

Le procédé de l'invention trouve notamment un grand intérêt dans la prise en compte de facteurs correctifs des composantes linéaires visant à corriger les effets induits d'un spectre en dehors d'une bande commune.

C'est par exemple le cas quand une partie du spectre de B1 qui n'est pas dans la bande commune C1 introduit des effets sur la linéarité de la polarisation des signaux de la bande C1 de B1.

Selon une cinquième configuration, représentée à la figure 4, une composante linéaire d'un signal pilote SP4 ou SP3 peut-être émise en dehors d'une bande d'un transpondeur T3 et respectivement T4 de sorte à mesurer les effets de non linéarité d'un transpondeur sur une composante linéaire donnée.

Dans ce cas de figure la composante linéaire émise en sortie du satellite par un seul transpondeur peut-être :
▪ soit reçue au sol par une antenne d'une seconde station au sol polarisée linéairement ; dans ce cas la composante linéaire est comparée à la composante émise par la première station au sol ANT1 vers le satellite SAT pour en déduire l'influence du transpondeur sur la composante ;
▪ soit reçue par des antennes polarisées circulairement dans des sens opposés pour reconstruire la composante linéaire et en déduire, par comparaison, un effet produit par le transpondeur T4, respectivement T3 du satellite SAT.

Les précédentes configurations peuvent également être combinées en utilisant, par exemple, une pluralité de transpondeurs de manière à optimiser le calcul des compensations à apporter aux composantes linéaires émises selon leurs bandes spectrales.

Selon un exemple de réalisation, une séquence de signaux pilotes comportant deux états de phase, comme par exemple une modulation BPSK, peut être utilisée. Cette séquence de signaux peut être utilisée afin de déterminer les effets introduits par les deux transpondeurs T1, T2, ayant des polarisations linéaires orthogonales. Cela permet donc de calculer les compensations à effectuer sur le signal S_{M} pour que la combinaison des signaux émis par T1, T2 soit en polarisation circulaire. Ces effets peuvent être des écarts de phases, des écarts temporels ou d'amplitudes des signaux traités par chacun des transpondeurs.

La séquence de signaux pilotes peut alors être utilisée pour identifier les écarts temporels introduits et causés par les deux transpondeurs T1, T2.

Cette séquence de signaux permet également de déduire les écarts d'amplitudes et de phases introduits par les deux transpondeurs T1, T2.

La puissance des signaux pilotes peut être calibrée de sorte à réduire au maximum les interférences avec les signaux principaux.

A cet effet, les signaux pilotes peuvent être également étalés dans le spectre par l'utilisation d'une séquence pseudo bruit PN, par exemple en utilisant une «Séquence de Gold ». Dans ce cas, comme détaillé précédemment, une séquence PN peut être utilisée pour coder une composante de polarisation linéaire.

### Réception au sol, seconde station

Une seconde station au sol comprenant une antenne ANT2 est utilisée pour recevoir les signaux émis par le satellite SAT. Les signaux émis par le satellite SAT correspondent aux composantes linéaires compensées par le procédé de l'invention émises par la première station au sol ANT1. Ces composantes corrigées sont traitées par les transpondeurs T1, T2, .., TN du satellite SAT par exemple par un filtrage, une transposition de fréquences de la porteuse, une amplification des signaux, un multiplexage, etc.

En sortie du satellite SAT, du fait des compensations introduites pour pallier aux effets non linéaires et aux erreurs introduites par chaque transpondeur, les composantes linéaires émises à une même fréquence porteuse forment un signal de polarisation circulaire.

En sortie du satellite SAT, un multiplexeur permet éventuellement de générer un signal comprenant différentes composantes.

Selon un mode de réalisation de l'invention, la seconde station au sol ANT2 est avantageusement un terminal de référence REF TERMINAL comportant deux antennes de polarisations circulaires opposées permettant de recevoir les deux composantes circulaires émises par le satellite SAT. On note les deux composantes ainsi : la composante circulaire gauche LHCP et la composante circulaire droite RHCP.

Les signaux émis par une antenne ANT1 ou par l'antenne du satellite sont notés RFs sur la figure 2.

Les deux composantes circulaires reçues par le terminal de référence REF TERMINAL sont traitées et transmises au contrôleur de polarisation POLA CONTROL de sorte à déterminer au moins un paramètre physique causant une altération d'au moins une polarisation circulaire des composantes reçues. Les altérations des polarisations des signaux en sortie du satellite SAT sont causées par les transpondeurs notamment à cause :
▪ du bruit blanc introduit par chaque transpondeur ;
▪ du bruit de phase qui est propre à aux bandes de fréquences de chaque transpondeur ;
▪ des erreurs relatives entre transpondeurs introduisant un décalage de phase, d'amplitude ou de fréquence entre les composantes de deux transpondeurs ;
▪ des effets de non linéarité des amplificateurs et des filtres de chaque transpondeur.

Les paramètres physiques qui sont déterminés en réception peuvent être utilisés pour calculer des paramètres correctifs de manière à corriger les composantes linéaires HP1, VP1 émises vers le satellite SAT.

Ainsi le système de l'invention forme un système bouclé et asservi permettant de corriger à partir de paramètres correctifs les composantes linéaires émises par la première station au sol ANT1.

Si le REF TERMINAL et le POLA CONTROL ne sont pas colocalisés, par exemple quand la couverture montante du satellite est différente de la couverture descendante, un moyen de communication entre REF TERMINAL et POLA CONTROL est nécessaire. Pour réduire la quantité de données envoyés, une partie de l'élaboration des signaux reçue par le REF TERMINAL peut être exécutée par le REF TERMINAL lui-même, en sorte d'envoyer au POLA CONTROL seulement les résultats des mesures et pas tous les signaux reçus.

Le REF TERMINAL et le POLA CONTROL peuvent être colocalisés de sorte à simplifier le mode opératoire du traitement des signaux reçus et l'analyse des paramètres physiques qui vont aboutir à la détermination de paramètres correctifs. Ceci est possible quand la station est localisée dans une région en commun entre la couvertures montante et la couverture descendante du satellite.

### Paramètres physiques

Selon un mode de réalisation, le satellite SAT émet une composante circulaire produite à partir des deux composantes linéaires corrigées et transitant par deux transpondeurs.

Selon un premier mode de réalisation, une seule antenne de réception est utilisée ANT2 dont le sens de la polarisation est adaptée à celui qui est générée par la combinaison des deux polarisations linéaires en sortie du satellite SAT.

Selon un second mode de réalisation, en réception au sol, deux antennes ANT2_L et ANT2_R polarisées circulairement selon des sens de polarisation opposés permettent de recevoir une première composante circulaire, par exemple gauche LHCP1, et une seconde composante circulaire, par exemple droite RHCP1.

A la réception, au moins une antenne ANT2 de polarisation circulaire reçoit les signaux polarisés circulairement. Les signaux reçus sont soit traités localement, soit transmis au contrôleur de polarisation POLA CONTROL pour en déduire des paramètres physiques des signaux reçus représentatifs d'écarts entre les deux polarisations linéaires formant la polarisation circulaire. Une mesure de puissance des signaux reçus, une analyse de spectre et une mesure de cross-polarisation peuvent être effectuées pour déduire des paramètres physiques tels que des décalages en fréquence, en phase et en amplitude des deux composantes linéaires formant le signal reçu par des antennes polarisées circulairement.

Les paramètres physiques mesurés correspondent donc à des paramètres de chaque composantes de polarisations linéaires exprimés en phase, en fréquence ou en amplitude qui induisent une déformation de la polarisation circulaire reçue supposée parfaite. Pour effectuer ces mesures, l'une des deux polarisations linéaires peut être choisie comme référence.

Selon un mode de réalisation, le contrôleur de polarisation POLA CONTROL est capable de déduire les composantes linéaires H et V des composantes de polarisations circulaires LHCP1 et RHCP1 reçues par au moins une antenne ANT2.

Un avantage de l'utilisation de deux antennes polarisées circulairement ANT2_L et ANT2_R selon des sens opposés, i.e. une polarisation circulaire droite et une gauche, provient du fait que le signal principal S_{M} reçu l'est sur l'une des polarisations circulaires et que la mesure de la puissance de signaux reçus sur la polarisation opposée, qui en principe devrait être nulle, permet de déduire facilement une partie des pertes liées à des phénomènes de cross polarisation.

Le contrôleur de polarisation POLA CONTROL est alors capable d'extraire des deux composantes circulaires au moins un paramètre physique quantitatif et/ou qualitatif responsable d'une altération de la polarisation circulaire des signaux reçus lorsque cette dernière est présente.

Les paramètres physiques peuvent donc être déduits par une mesure du spectre pour déduire une dérive fréquentielle, des mesures des puissances des signaux reçus, ou encore des variations de phases des signaux reçus sur chacune des polarisations circulaires de sorte à en déduire des paramètres correctifs des composantes linéaires HP1 et VP1 à émettre vers le satellite SAT.

Les paramètres physiques peuvent être déduits de l'analyse du signal principal S_{M} reçu sur chacune des composantes circulaires. En outre, les paramètres physiques peuvent être déduits de l'analyse des signaux pilotes sur chacune des composantes circulaires reçues lorsque ces derniers sont utilisés.

Les paramètres physiques peuvent être également simplement déduits d'une comparaison de paramètres de composantes linéaires émises et les composantes correspondantes reçues.

Il y a donc une première analyse dite « relative » entre les deux composantes entre elles et une seconde analyse dite « comparative » entre les composantes émises et reçues. Ces deux analyses permettent de déduire des paramètres physiques et donc des paramètres correctifs. Ces deux analyses peuvent être combinées ou réalisées indépendamment l'une de l'autre de manière à déterminer des paramètres correctifs.

### Paramètre correctifs

Le contrôleur de polarisation POLA CONTROL est capable de déduire des paramètres correctifs à appliquer sur chaque composantes linéaires à émettre en fonction des paramètres physiques déduits des signaux reçus par le lien retour permettant de mettre en œuvre le procédé de l'invention. Le lien retour permet de former un système bouclé entre une première station au sol ANT1, le satellite SAT et une seconde station au sol ANT2. La seconde station au sol ANT2 est une forme de récepteur « témoin » qui permet de piloter les composantes linéaires à émettre pour qu'un ensemble d'utilisateurs MT1, MT2, comprenant des antennes polarisées circulairement, puissent recevoir de façon optimale le signal principal S_{M} émis par le satellite SAT.

Lorsque les deux antennes ANT1 et ANT2 sont distantes et qu'une transmission filaire ou par voie satellitaire est requise, pour transmettre les signaux reçus au contrôleur de polarisation POLA CONTROL, une correction du temps de propagation peut être générée par le contrôleur de polarisation POLA CONTROL aux signaux reçus. Alternativement, les signaux reçus par ANT2 sont analysés localement et les résultats de l'analyse envoyés à POLA CONTROL.

L'estimation de la dérive fréquentielle peut être calculée par le contrôleur de polarisation POLA CONTROL à partir d'un estimateur. A titre d'exemple un algorithme de Mengali-Morelli peut être utilisé à cet effet. Une polarisation linéaire est choisie comme référence, par exemple la polarisation verticale. La dérive fréquentielle est déduite par comparaison des deux composantes linéaires.

Une correction de fréquence peut être introduite dans la composante présentant un décalage avec la référence. Un décalage opposé peut être également introduit dans la composante de référence. Le facteur correctif peut également être partagé sur les deux composantes.

L'estimation de la variation de phase entre les deux composantes peut être calculée également à partir du contrôleur de polarisation POLA CONTROL. Une composante linéaire est alors choisie comme référence, par exemple la composante verticale.

La variation de phase peut être calculée entre les deux composantes linéaires selon une analyse relative. Une variation de phase entre chaque composante linéaire reçue peut être calculée avec les composantes enregistrées qui ont été précédemment émises.

Cette double comparaison permet de mesurer les écarts relatifs d'un transpondeur à l'autre et de mesurer les écarts absolus d'un système bouclé entre des composantes émises et reçues.

Une correction de phase peut être introduite dans la composante présentant un décalage avec la référence. Un décalage opposé peut être également introduit dans la composante de référence. Le facteur correctif peut également être partagé sur les deux composantes.

La variation d'amplitude relative entre les deux composantes peut être mesurée par un estimateur. Selon un mode de réalisation, l'estimateur peut se baser sur les niveaux de puissances reçues de chaque composante.

Une correction peut être appliquée lors de l'émission des composantes linéaires HP1 et VP1 en prenant en considération l'écart d'amplitude des deux composantes déduites des composantes circulaires reçues par la seconde station au sol ANT2. L'amplificateur présent soit dans le contrôleur de polarisation, soit dans un composant situé avant l'antenne ANT1, soit dans l'antenne ANT1, peut être piloté de sorte à amplifier l'une des composantes linéaires avec le paramètre correctif.

Dans une autre réalisation, l'amplification peut être paramétrée grâce à un coefficient numérique appliqué à la séquence numérique du signal qui est transmise au Convertisseur numérique/ analogique, également appelé DAC ou CNA.

Selon un mode de réalisation, chaque composante est amplifiée en prenant en considération une partie de la compensation à appliquer en amplitude.

### Compensation multi-spectres dans un transpondeur

Lorsque que le signal principal S_{M}, dans une bande montante ou descendante du transpondeur, comporte différentes porteuses ou que le spectre du signal est présent dans différentes sous bandes d'un même transpondeurs, comme les sous bandes représentées C1 et C2 du transpondeur T1 en figure 4, alors une correction peut être appliqué pour compenser les effets d'un premier sous-spectre SPC1 sur un second sous spectre SPC2 et réciproquement.

Pour cela une mesure de l'influence par exemple de la composante horizontale dans la bande C2 sur la composante horizontale transmise dans la bande C1 peut être évaluée par le contrôleur de polarisation POLA CONTROL.

On parle indifféremment d' « influence sur une composante linéaire » et d' « influence sur un signal » dans la description.

Une première influence phase/ amplitude peut être estimée, c'est-à-dire l'influence de l'amplitude du signal transmis dans la bande C2 sur une variation de phase du signal transmis dans la bande C1. Cette influence peut être compensée par le contrôleur de polarisation après l'évaluation des paramètres physiques des signaux reçus par la seconde station au sol ANT2.

Une seconde influence amplitude/ amplitude peut être estimée, c'est-à-dire l'influence de l'amplitude du signal transmis dans la bande C2 sur l'amplitude du signal transmis dans la bande C1. Cette influence peut être compensée par le contrôleur de polarisation après l'évaluation des paramètres physiques des signaux reçus par la seconde station au sol ANT2.

Typiquement, le procédé de l'invention permet de prendre en considération l'influence d'un signal pilote S_{P1} émis dans la bande C1 sur un signal émis SPC2(S_{M1}) dans la bande C2, du moins de la composante linéaire considérée.

Réciproquement, il peut être mesuré l'influence d'un signal SPC1(S_{M1}) transmis dans la sous-bande C2 sur un signal pilote S_{P1} transmis dans la bande C1.

Le procédé de l'invention s'applique lorsque les deux sous-spectres SPC1 et SPC2 ne sont pas traités par les mêmes opérateurs ou par les mêmes antennes ANT1 d'une même station au sol. Lorsque les signaux SPC1, SPC2 proviennent de différents opérateurs, dans un transpondeur polarisé linéairement, les deux signaux peuvent s'auto-générer des écarts de phase ou d'amplitude qu'il est nécessaire de corriger. Le procédé de l'invention permet de réaliser de telles corrections.

Le contrôleur de polarisation peut contrôler et détecter en temps réel la présence d'un signal ayant un spectre SPC2 et appliquer des facteurs correctifs sur les composantes d'un signal ayant un spectre SPC1.

Lorsque le contrôleur de polarisation POLA CONTROL contrôle les signaux des deux spectres SPC1 et SPC2, les paramètres correctifs peuvent être appliqués à chaque composante verticale ou horizontale transmises dans un même transpondeur T1.

Selon un exemple de réalisation dans lequel le procédé de l'invention permet de générer un signal pilote S_{P1} dans une bande C1 d'un transpondeur T1, l'amplitude et la phase de ce signal pilote S_{P1} peuvent être suivies de sorte à prendre en considération les effets induits par la présence de signaux dans la bande C2 de ce même transpondeur.

## Revendications

1. Procédé de génération d'un signal ayant un second type de polarisation à partir d'au moins deux transpondeurs d'un satellite (SAT) adaptés à traiter des signaux polarisés selon un premier type de polarisation, le procédé comprenant :
▪ Une émission par un émetteur au sol (ANT1) à destination du satellite (SAT) :
o d'au moins deux composantes de signaux (VP1, HP1) polarisés avec le premier type de polarisation à partir d'un signal principal (S_{M}) et déphasés de telle sorte à produire un signal polarisé avec le second type de polarisation par au moins deux transpondeurs d'un satellite (SAT), les aux moins deux transpondeurs (T1, T2) ayant des canaux en fréquences partageant entre eux au moins une bande spectrale commune (C1) comprenant au moins une partie du spectre des signaux émis ;
∘ d'au moins un signal pilote (Sp), ledit signal pilote (Sp) comprenant au moins une composante de polarisation linéaire ou circulaire (Sp1) formant soit une onde continue (CW), soit une séquence étalée dans le spectre (PN),
▪ Un traitement des signaux (HP1, VP1) par les aux moins deux transpondeurs (T1, T2) du satellite (SAT), les composantes des signaux (HP1, VP1) se combinant après leur émission par le satellite (SAT) pour former un signal avec une polarisation du second type (SAT), ledit signal étant destiné à être réémis vers un terminal de référence (ANT2) au sol ;
▪ Une réception par le terminal de référence (ANT2) au sol possédant au moins une antenne polarisée avec le premier ou le second types de polarisation (RHCP, LHCP, H, V), de manière à recevoir les signaux émis par le satellite (SAT) ;
▪ Une mesure :
∘ d'au moins un paramètre physique à partir des signaux reçus provenant du signal principal (S_{M}) et ;
∘ d'au moins un paramètre physique à partir des signaux reçus provenant du ou des signaux pilotes (Sp) ;
les paramètres physiques mesurés correspondant à des paramètres de chaque composante de polarisation des signaux exprimés en phase, en fréquence ou en amplitude qui induisent une déformation de la polarisation reçue supposée parfaite ;
▪ une détermination d'un paramètre de correction de la déformation ainsi mesurée pour être appliqué à la génération des composantes de signaux polarisés avec le premier type de polarisation (VP1, HP1) ;
▪ à partir du paramètre de correction ainsi déterminé, une génération d'une compensation de phase et/ou d'amplitude et/ou de fréquence des composantes des signaux polarisés selon le premier type de polarisation émis par l'émetteur au sol (ANT1), ladite compensation étant générée par le contrôleur de polarisation (POLA CONTROL) de sorte à former un système bouclé entre l'émetteur au sol (ANT1) et le satellite (SAT) et à assurer une polarisation du second type par les composantes se combinant après leur émission par le satellite (SAT).

2. Procédé selon la revendication 1, **caractérisé en ce que** le premier type de polarisation est une polarisation linéaire et le second type de polarisation est une polarisation circulaire.

3. Procédé selon la revendication 1, **caractérisé en ce que** le premier type de polarisation est une polarisation circulaire et le second type de polarisation est une polarisation linéaire.

4. Procédé selon la revendication 2, **caractérisé en ce que** le contrôleur de polarisation (POLA CONTROL) génère deux composantes linéaires (H, V) orthogonales à partir d'un signal principal (S_{M}) délivré en entrée dudit contrôleur de polarisation (POLA CONTROL), un premier composant générant une composante de polarisation horizontale (HP1) à partir du signal principal (S_{M}) et un second composant générant une composante de polarisation verticale (VP1) à partir du signal principal (S_{M}), au moins une composante de polarisation linéaire (HP1, VP1) étant compensée en amplitude et/ou en phase et/ou en fréquence.

5. Procédé selon la revendication 2, **caractérisé en ce que** le contrôleur de polarisation (POLA CONTROL) génère deux composantes linéaires (HP1, VP1) à partir de deux signaux principaux (S_{M1}, S_{M2}) délivrés en entrée dudit contrôleur de polarisation (POLA CONTROL), un premier signal (S_{M1}) ayant en sortie du satellite SAT une polarisation circulaire gauche (LHCP) et un second signal (S_{M2}) ayant en sortie du satellite SAT une polarisation circulaire droite (RHCP), le contrôleur de polarisation (POLA CONTROL) générant une composante du signal de polarisation horizontale (HP1) et une composante du signal de polarisation verticale (VP1) à partir des deux signaux principaux en entrées (S_{M1}, S_{M2}), au moins une composante de polarisation linéaire (HP1, VP1) étant compensée en amplitude et/ou en phase et/ou en fréquence .

6. Procédé selon l'une quelconque des revendications 1 ou 5, **caractérisé en ce que** deux ensembles de transpondeurs ((T1, T3, T5) et (T2, T4, T6, T8)) sont associés chacun à une polarisation linéaire donnée, une polarisation d'un transpondeur d'un premier ensemble (T1, T3, T5) étant orthogonale à la polarisation linéaire d'un transpondeur du second ensemble (T2, T4, T6, T8), chaque transpondeur (T1) du premier ensemble (T1, T3, T5) partageant au moins une bande spectrale commune (C1) avec un transpondeur (T2) du second ensemble (T2, T4, T6, T8).

7. Procédé selon la revendication 6, **caractérisé en ce que** les deux composantes linéaires émises (HP1, VP1) par l'émetteur au sol (ANT1) comprennent chacune au moins un spectre fréquentiel compris dans la bande spectrale commune (C1) à au moins deux transpondeurs (T1, T2) du satellite (SAT).

8. Procédé selon la revendication 7, **caractérisé en ce qu'**au moins un premier transpondeur (T1) du premier ensemble (T1, T3, T5) partage au moins une bande spectrale commune avec deux autres transpondeurs (T2, T4) du second ensemble (T2, T4, T6, T8) les deux autres transpondeurs ayant une polarisation orthogonale au premier transpondeur, ladite bande spectrale commune comprenant deux sous-bandes spectrales (C1, C2).

9. Procédé selon la revendication 8, **caractérisé en ce que** l'étape de génération d'une compensation de phase et/ou d'amplitude et/ou de fréquence des signaux polarisés linéairement (HP1, VP1) par le contrôleur de polarisation (POLA CONTROL) est configurée de sorte à diminuer les effets sur au moins une composante linéaire (HP1, VP1), lesdits effets étant liés à la présence d'au moins un spectre (SPC2) d'un signal transmis par le premier transpondeur (T1) dans une bande (C2) en dehors de la bande commune (C1) de deux transpondeurs (T1, T2), dans laquelle bande commune (C1), ladite au moins une composante linéaire (HP1 ou VP1) est émise.

10. Procédé selon la revendication 9, **caractérisé en ce que** la diminution de l'influence est calibrée pour obtenir une polarisation circulaire formée par deux polarisations linéaires de composantes (HP1, VP1) partageant une bande commune (C1) de deux transpondeurs (T1, T2) respectivement du premier et du second ensemble de transpondeurs.

11. Procédé selon l'une quelconque des revendications 6 à 10, **caractérisé en ce qu'**il comprend une étape de filtrage de chaque composante polarisée linéairement dans les portions communes de spectres partagées (C1) entre respectivement deux transpondeurs (T1, T2) de chacun des deux ensembles de transpondeurs.

12. Procédé selon l'une quelconque des revendications 1 à 11, **caractérisé en ce qu'**un signal pilote (Sₚ) est émis par l'émetteur sol (ANT1), ledit signal pilote (Sₚ) comprenant au moins une composante de polarisation linéaire (Sₚ₁) formant soit une onde continue (CW), soit une séquence étalée dans le spectre (PN).

13. Procédé selon la revendication 12, **caractérisé en ce que** le signal pilote (Sₚ) comprend deux composantes de polarisation linéaire (Sₚ₁, Sₚ₂), les deux composantes polarisées linéairement (S_{P1}, S_{P2}) étant émises dans le spectre commun de deux transpondeurs (T1, T2) appartenant respectivement à chacun des deux ensembles de transpondeurs.

14. Procédé selon la revendication 12, **caractérisé en ce qu'**une composante de polarisation linéaire (Sₚ₃, Sₚ₄) du signal pilote est émise dans une bande de fréquences d'un transpondeur (T3) du premier ensemble de transpondeurs (T1, T3, T5) non partagée avec une bande de fréquence d'un transpondeur (T4) du second ensemble de transpondeurs (T2, T4, T6, T8).

15. Dispositif de correction de polarisation de composantes de signaux, **caractérisé en ce qu'**il comprend un contrôleur de polarisation (POLA CONTROL) comportant des moyens de calculs et une mémoire pour appliquer des paramètres correctifs à des composantes linéaires ou circulaires de signaux, les dits paramètres correctifs étant estimés pour pallier à un traitement desdits signaux transitant dans au moins deux transpondeurs d'un satellite, les corrections appliquées permettant de générer un signal avec polarisation circulaire ou linéaire lorsque les signaux se combinent en sortie des transpondeurs, ledit dispositif étant configuré pour générer ledit signal à l'aide d'un procédé selon l'une des revendications précédentes.

## Patentansprüche

1. Erzeugungsverfahren eines Signals mit einem zweiten Polarisationstyp ausgehend von wenigstens zwei Transpondern eines Satelliten (SAT), die zum Verarbeiten der polarisierten Signale gemäß einem ersten Polarisationstyp geeignet sind, wobei das Verfahren umfasst:
▪ ein Senden durch einen Sender am Boden (ANT1) an den Satelliten (SAT):
∘ von wenigstens zwei Signalkomponenten (VP1, HP1), die mit dem ersten Polarisationstyp ausgehend von einem Hauptsignal (S_{M}) polarisiert und derart phasenverschoben sind, dass ein polarisiertes Signal mit dem zweiten Polarisationstyp durch wenigstens zwei Transponder eines Satelliten (SAT) erzeugt werden, wobei die wenigstens zwei Transponder (T1, T2) Kanäle in Frequenzen aufweisen, die miteinander wenigstens ein gemeinsames Spektralband (C1) teilen, umfassend wenigstens einen Teil des Spektrums der ausgegebenen Signale;
∘ von wenigstens einem Pilotsignal (Sp), wobei das genannte Pilotsignal (Sp) wenigstens eine lineare oder kreisförmige Polarisationskomponente (Sp1) umfasst, die entweder eine kontinuierliche Welle (CW) oder eine in dem Spektrum (PN) verteilte Sequenz bildet;
▪ eine Signalverarbeitung (HP1, VP1) durch die wenigstens zwei Transponder (T1, T2) des Satelliten (SAT), wobei die Komponenten der Signale (HP1, VP1) nach ihrer Ausgabe durch den Satelliten (SAT) kombiniert werden, um ein Signal mit einer Polarisation des zweiten Typs (SAT) zu bilden, wobei das genannte Signal dazu bestimmt ist, zu einem Referenzterminal (ANT2) am Boden geschickt zu werden;
▪ einen Empfang durch das Referenzterminal (ANT2) am Boden, das wenigstens eine mit dem ersten oder zweiten Polarisationstyp (RHCP, LHCP, H, V) polarisierte Antenne derart besitzt, dass die von dem Satelliten (SAT) empfangenen Signale empfangen werden;
▪ eine Messung:
∘ wenigstens eines physischen Parameters ausgehend von den empfangenen Signalen, die von dem Hauptsignal (S_{M}) stammen, und;
∘ wenigstens eines physischen Parameters ausgehend von den empfangenen Signalen, die von dem oder den gesteuerten Signal(en) (Sp) stammen;
wobei die gemessenen physischen Parameter den Parametern jeder Polarisationskomponente der Signale entsprechen, die in der Phase, der Frequenz oder der Amplitude ausgedrückt werden, die eine Verformung der empfangenen Polarisation induzieren, die als perfekt gilt;
▪ eine Bestimmung eines Korrekturparameters der auf diese Weise gemessenen Verformung, um auf das Erzeugen der Komponenten von polarisierten Signalen mit dem ersten Polarisationstyp (VP1, HP1) angewendet zu werden;
▪ ausgehend von dem auf diese Weise bestimmten Korrekturparameter ein Erzeugen eines Phasenausgleichs und / oder Amplitudenausgleichs und / oder Frequenzausgleichs der Komponenten der polarisierten Signale gemäß dem ersten Polarisationstyp, der von dem Sender am Boden (ANT1) ausgegeben wird, wobei der Ausgleich durch die Polarisationssteuereinheit (POLA CONTROL) derart erzeugt wird, dass ein geschlossenes System zwischen dem Sender am Boden (ANT1) und dem Satelliten (SAT) gebildet wird und eine Polarisation vom zweiten Typ durch die Komponenten gewährleistet wird, die nach ihrem Senden durch den Satelliten (SAT) kombiniert werden.

2. Verfahren gemäß Anspruch 1, **dadurch gekennzeichnet, dass** der erste Polarisationstyp eine lineare Polarisation ist und der zweite Polarisationstyp eine kreisförmige Polarisation ist.

3. Verfahren gemäß Anspruch 1, **dadurch gekennzeichnet, dass** der erste Polarisationstyp eine kreisförmige Polarisation ist und der zweite Polarisationstyp eine lineare Polarisation ist.

4. Verfahren gemäß Anspruch 2, **dadurch gekennzeichnet, dass** die Polarisationssteuereinheit (POLA CONTROL) zwei lineare Komponenten (H, V) erzeugt, die ausgehend von einem Hauptsignal (S_{M}) orthogonal sind, das am Eingang der genannten Polarisationssteuereinheit (POLA CONTROL) gesendet wird, wobei eine erste Komponente eine horizontale Polarisationskomponente (HP1) ausgehend von dem Hauptsignal (S_{M}) erzeugt und eine zweite Komponente eine vertikale Polarisationskomponente (VP1) ausgehend von dem Hauptsignal (S_{M}) erzeugt, wobei wenigstens eine lineare Polarisationskomponente (HP1, VP1) in der Amplitude und / oder der Phase und / oder der Frequenz ausgeglichen wird.

5. Verfahren gemäß Anspruch 2, **dadurch gekennzeichnet, dass** die Polarisationssteuereinheit (POLA CONTROL) zwei lineare Komponenten (HP1, VP1) ausgehend von zwei Hauptsignalen (S_{M1}, S_{M2}) erzeugt, die am Eingang der genannten Polarisationssteuereinheit (POLA CONTROL) ausgegeben werden, wobei ein erstes Signal (S_{M1}) am Ausgang des Satelliten SAT eine linke kreisförmige Polarisation (LHCP) aufweist und ein zweites Signal (S_{M2}) am Ausgang des Satelliten SAT eine rechte kreisförmige Polarisation (RHCP) aufweist, wobei die Polarisationssteuereinheit (POLA CONTROL) eine Komponente des horizontalen Polarisationssignals (HP1) und eine Komponente des vertikalen Polarisationssignals (VP1) ausgehend von den zwei Hauptsignalen an den Eingängen (S_{M1}, S_{M2}) erzeugt, wobei wenigstens eine lineare Polarisationskomponente (HP1, VP1) in der Amplitude und / oder der Phase und / oder in der Frequenz ausgeglichen wird.

6. Verfahren gemäß irgendeinem der Ansprüche 1 oder 5, **dadurch gekennzeichnet, dass** zwei Transpondergruppen ((T1, T3, T5) und (T2, T4, T6, T8)) jeweils einer bestimmten linearen Polarisation zugeordnet sind, wobei eine Polarisation eines Transponders einer ersten Gruppe (T1, T3, T5) orthogonal zur linearen Polarisation eines Transponders der zweiten Gruppe (T2, T4, T6, T8) ist, wobei jeder Transponder (T1) der ersten Gruppe (T1, T3, T5) wenigstens ein gemeinsames Spektralband (C1) mit einem Transponder (T2) der zweiten Gruppe (T2, T4, T6, T8) teilt.

7. Verfahren gemäß Anspruch 6, **dadurch gekennzeichnet, dass** die zwei linearen Komponenten, die vom Sender am Boden (ANT1) gesendet werden (HP1, VP1), jeweils wenigstens ein Frequenzspektrum umfassen, das in dem Spektralband (C1) umfasst ist, das wenigstens zwei Transpondern (T1, T2) des Satelliten (SAT) gemeinsam ist.

8. Verfahren gemäß Anspruch 7, **dadurch gekennzeichnet, dass** wenigstens ein erster Transponder (T1) der ersten Gruppe (T1, T3, T5) wenigstens ein gemeinsames Spektralband mit zwei anderen Transpondern (T2, T4) der zweiten Gruppe (T2, T4, T6, T8) teilt, wobei die anderen zwei Transponder eine orthogonale Polarisation zum ersten Transponder aufweisen, wobei das genannte gemeinsame Spektralband zwei Unter-Spektralbänder (C1, C2) aufweist.

9. Verfahren gemäß Anspruch 8, **dadurch gekennzeichnet, dass** der Erzeugungsschritt eines Phasenausgleichs und / oder Amplitudenausgleichs und / oder Frequenzausgleichs der von der Polarisationssteuerung (POLA CONTROL) linear (HP1, VP1) polarisierten Signale derart ausgestaltet wird, dass die Auswirkungen auf wenigstens eine lineare Komponente (HP1, VP1) gemindert werden, wobei die genannten Auswirkungen mit dem Vorhandensein wenigstens eines Spektrums (SPC2) eines Signals verbunden sind, das von dem ersten Transponder (T1) in einem Band (C2) außerhalb des gemeinsamen Bandes (C1) von zwei Transpondern (T1, T2) in dem genannten gemeinsamen Band (C1) übertragen wird, wobei die genannte wenigstens eine lineare Komponente (HP1 oder VP1) gesendet wird.

10. Verfahren gemäß Anspruch 9, **dadurch gekennzeichnet, dass** die Minderung des Einflusses kalibriert wird, um eine kreisförmige Polarisation zu erhalten, die von zwei linearen Polarisationen von Komponenten (HP1, VP1) gebildet wird, die ein gemeinsames Band (C1) aus zwei Transpondern (T1, T2) jeweils der ersten und der zweiten Gruppe von Transpondern teilen.

11. Verfahren gemäß irgendeinem der Ansprüche 6 bis 10, **dadurch gekennzeichnet, dass** es einen Filterschritt jeder linear polarisierten Komponente in den gemeinsamen Abschnitten von Spektren (C1) umfasst, die jeweils zwischen zwei Transpondern (T1, T2) jeder der zwei Transpondergruppen geteilt werden.

12. Verfahren gemäß irgendeinem der Ansprüche 1 bis 11, **dadurch gekennzeichnet, dass** ein Steuersignal (S_{P}) vom Bodensender (ANT1) gesendet wird, wobei das genannte Steuersignal (S_{P}) wenigstens eine lineare Polarisationskomponente (S_{P1}) umfasst, die entweder eine kontinuierliche Welle (CW) oder eine im Spektrum (PN) verteilte Sequenz bildet.

13. Verfahren gemäß Anspruch 12, **dadurch gekennzeichnet, dass** das Steuersignal (S_{P}) zwei lineare Polarisationskomponenten (S_{P1}, S_{P2}) umfasst, wobei die zwei linear polarisierten Komponenten (S_{P1}, S_{P2}) in dem gemeinsamen Spektrum von zwei Transpondern (T1, T2) gesendet werden, die jeweils zu jedem der zwei Transpondergruppen gehören.

14. Verfahren gemäß Anspruch 12, **dadurch gekennzeichnet, dass** eine lineare Polarisationskomponente (S_{P3}, S_{P4}) des Steuersignals in einem Frequenzband eines Transponders (T3) der ersten Transpondergruppe (T1, T3, T5) gesendet wird, die nicht mit einem Frequenzband eines Transponders (T4) der zweiten Transpondergruppe (T2, T4, T6, T8) geteilt wird.

15. Polarisations-Korrekturvorrichtung von Signalkomponenten, **dadurch gekennzeichnet, dass** sie eine Polarisationssteuereinheit (POLA CONTROL) umfasst, umfassend Berechnungsmittel und einen Speicher zum Anwenden der Korrekturparameter auf lineare oder kreisförmige Signalkomponenten, wobei die genannten Korrekturparameter geschätzt werden, um eine Behandlung der genannten Signale auszugleichen, die in wenigstens einem der von zwei Transpondern eines Satelliten hindurchtreten, wobei die angewendeten Korrekturen das Erzeugen eines Signals mit kreisförmiger oder linearer Polarisation erlauben, wenn die Signale am Ausgang der Transponder kombiniert werden, wobei die genannte Vorrichtung ausgestaltet ist, um das genannte Signal mithilfe eines Verfahrens gemäß einem der voranstehenden Ansprüche ausgestaltet wird.

## Claims

1. Method for generating a signal having a second polarisation type from at least two transponders of a satellite (SAT) suitable for processing polarised signals according to a first polarisation type, the method comprising:
- Transmitting by a ground transmitter (ANT1) to the satellite (SAT):
∘ of at least two signal components (VP1, HP1) polarised with the first polarisation type from a main signal (SM) and phase-shifted in such a way as to produce a polarised signal with the second polarisation type by at least two transponders of a satellite (SAT), the at least two transponders (T1, T2) having frequency channels sharing between them at least one common spectral band (C1) comprising at least one portion of the spectrum of the transmitted signals;
∘ of at least one pilot signal (Sp), said pilot signal (Sp) comprising at least one linear or circular polarisation component (Sp1) forming either a continuous wave (CW), or a sequence spread in the spectrum (PN),
- Processing the signals (HP1, VP1) by the at least two transponders (T1, T2) of the satellite (SAT), with the components of the signals (HP1, VP1) being combined after their transmission by the satellite (SAT) to form a signal with a second polarisation type (SAT), said signal being intended to be retransmitted to a reference terminal (ANT2) on the ground;
- Receiving by the reference terminal (ANT2) on the ground that has at least one polarised antenna with the first or second polarisation types (RHCP, LHCP, H, V), so as to receive the signals transmitted by the satellite (SAT);
- Measuring:
∘ of at least one physical parameter from signals received coming from the main signal (S_{M}) and;
∘ of at least one physical parameter from the signals received coming from the pilot signal or signals (Sp);
the physical parameters measured corresponding to parameters of each polarisation component of the signals expressed in phase, in frequency or in amplitude which induce a deformation in the polarisation received which is assumed to be perfect;
- determining a correction parameter of the deformation thus measured to be applied to the generation of the signal components polarised with the first polarisation type (VP1, HP1);
- from the correction parameter thus determined, generation of phase and/or amplitude and/or frequency compensation of the components of the polarised signals according to the first polarisation type transmitted by the transmitter to the ground (ANT1), said compensation being generated by the polarisation controller (POLA CONTROL) in such a way as to form a loop system between the transmitter on the ground (ANT1) and the satellite (SAT) and to ensure a second polarisation type by the components that are combined together after they are transmitted by the satellite (SAT).

2. Method according to claim 1, **characterised in that** the first polarisation type is a linear polarisation and the second polarisation type is a circular polarisation.

3. Method according to claim 1, **characterised in that** the first polarisation type is a circular polarisation and the second polarisation type is a linear polarisation.

4. Method according to claim 2, **characterised in that** the polarisation controller (POLA CONTROL) generates two orthogonal linear components (H, V) from a main signal (S_{M}) delivered as input of said polarisation controller (POLA CONTROL), a first component generating a horizontal polarisation component (HP1) from the main signal (SM) and a second component generating a vertical polarisation component (VP1) from the main signal (SM), at least one linear polarisation component (HP1, VP1) being compensated in amplitude and/or in phase and/or in frequency.

5. Method according to claim 2, **characterised in that** the polarisation controller (POLA CONTROL) generates two linear components (HP1, VP1) from two main signals (S_{M1}, S_{M2}) delivered as input of said polarisation controller (POLA CONTROL), a first signal (S_{M1}) having as output of the satellite SAT a left circular polarisation (LHCP) and a second signal (S_{M2}) having as output of the satellite SAT a right circular polarisation (RHCP), the polarisation controller (POLA CONTROL) generating a component of the horizontal polarisation signal (HP1) and a component of the vertical polarisation signal (VP1) from two main signals as input (S_{M1}, S_{M2}), at least one linear polarisation component (HP1, VP1) being compensated in amplitude and/or in phase and/or in frequency.

6. Method according to any of claims 1 or 5, **characterised in that** two sets of transponders ((T1, T3, T5) and (T2, T4, T6, T8)) are each associated with a given linear polarisation, a polarisation of a transponder of a first set (T1, T3, T5) being orthogonal to the linear polarisation of a transponder of the second set (T2, T4, T6, T8), each transponder (T1) of the first set (T1, T3, T5) sharing at least one common spectral band (C1) with a transponder (T2) of the second set (T2, T4, T6, T8).

7. Method according to claim 6, **characterised in that** the two linear components transmitted (HP1, VP1) by the transmitter to the ground (ANT1) each comprise at least one frequency spectrum included in the spectral band common (C1) to at least two transponders (T1, T2) of the satellite (SAT).

8. Method according to claim 7, **characterised in that** at least one first transponder (T1) of the first set (T1, T3, T5) shares at least one common spectral band with two other transponders (T2, T4) of the second set (T2, T4, T6, T8) the two other transponders having a polarisation orthogonal to the first transponder, said common spectral band comprising two spectrum sub-bands (C1, C2).

9. Method according to claim 8, **characterised in that** the step of generating a phase and/or amplitude and/or frequency compensation of the linearly polarised signals (HP1, VP1) by the polarisation controller (POLA CONTROL) is configured in such a way as to decrease the effects on at least one linear component (HP1, VP1), said effects being linked to the presence of at least one spectrum (SPC2) of a signal transmitted by the first transponder (T1) in a band (C2) outside the common band (C1) of two transponders (T1, T2), in which common band (C1), said at least one linear component (HP1 or VP1) is transmitted.

10. Method according to claim 9, **characterised in that** the decrease in the influence is calibrated to obtain a circular polarisation formed by two linear polarisations of components (HP1, VP1) sharing a common band (C1) of two transponders (T1, T2) respectively of the first and of the second set of transponders.

11. Method according to any of claims 6 to 10, **characterised in that** it comprises a step of filtering each linearly polarised component in common portions of spectra shared (C1) between respectively two transponders (T1, T2) of each one of the set sets of transponders.

12. Method according to any of claims 1 to 11, **characterised in that** a pilot signal (Sₚ) is transmitted by the ground transmitter (ANT1), said pilot signal (Sₚ) comprising at least one linear polarisation component (Sₚ₁) forming either a continuous wave (CW), or a sequence spread in the spectrum (PN).

13. Method according to claim 12, **characterised in that** the pilot signal (Sp) comprises two linear polarisation components (Sₚ₁, Sₚ₂), the two linearly polarised components (S_{P1}, S_{P2}) being transmitted in the common spectrum of two transponders (T1, T2) belonging respectively to each one of the two sets of transponders.

14. Method according to claim 12, **characterised in that** a linear polarisation component (Sₚ₃, Sₚ₄) of the pilot signal is transmitted in a frequency band of a transponder (T3) of the first set of transponders (T1, T3, T5) not shared with a frequency band of a transponder (T4) of the second set of transponders (T2, T4, T6, T8).

15. Device for correcting the polarisation of signal components, **characterised in that** it comprises a polarisation controller (POLA CONTROL) comprising calculation means and a memory to apply corrective parameters to linear or circular signal components, said corrective parameters being estimated to overcome a processing of said signals transmitting in at least two transponders of a satellite, the corrections applied making it possible to generate a signal with circular or linear polarisation when the signals are combined at the output of the transponders, said device being configured to generate said signal using a method according to one of the preceding claims.
